# DEMANDE DE BREVET EUROPEEN

(11) **EP 1 077 247 A1**
(43) Date de publication de la demande: **21.02.2001**
(21) Numéro de dépôt: 00401559.0
(22) Date de dépôt: 02.06.2000
(51) Int. Cl.: C10G 65/06, C10G 65/00

(54) **Procédé de production d'essences à faible teneur en soufre**

(30) Priorité: 19.08.1999 FR 9910653
(71) Demandeur: INSTITUT FRANCAIS DU PETROLE, 92852 Rueil-Malmaison Cedex (FR)
(72) Inventeur: Didillon, Blaise, 92500 Rueil Malmaison (FR); Uzio, Denis, 78160 Marly Le Roi (FR); Marchal, Nathalie, 69230 Saint Genis Laval (FR)

(57) **Abrégé**

L'invention concerne un procédé de production d'essence à faible teneur en soufre comprenant au moins les étapes suivantes :
a1) au moins une hydrogénation sélective des dioléfines.
a2) éventuellement au moins une étape visant à augmenter le poids moléculaire des produits soufrés légers présents dans l'essence.
b) au moins une séparation de l'essence obtenue à l'étape a1 ou a2 en deux fractions : essence légère et essence lourde.
c) au moins un traitement de l'essence lourde séparée à l'étape b sur un catalyseur permettant de décomposer ou d'hydrogéner au moins partiellement les composés soufrés insaturés.
d) au moins un traitement de l'essence lourde obtenue à l'étape c, sans élimination de l'H2S formé au cours de cette étape, sur un catalyseur permettant de décomposer les composés soufrés et plus préférentiellement les composés saturés linéaires et/ou cycliques.

## Description

La présente invention concerne un procédé de production d'essences à faible teneur en soufre, qui permet de valoriser la totalité d'une coupe essence contenant du soufre, de réduire les teneurs en soufre total de ladite coupe essence à de très faibles niveaux, sans diminution sensible du rendement en essence, et en minimisant la diminution de l'indice d'octane due à l'hydrogénation des oléfines.

### Art antérieur :

La production d'essences reformulées répondant aux nouvelles normes d'environnement nécessite notamment que l'on diminue faiblement leur concentration en oléfines mais de façon importante leur concentration en aromatiques (surtout le benzène) et en soufre. Les essences de craquage catalytique, qui peuvent représenter 30 à 50 % du pool essence, présentent des teneurs en oléfines et en soufre élevées. Le soufre présent dans les essences reformulées est imputable, à près de 90%, à l'essence de craquage catalytique (FCC, « Fluid Catalytic Cracking » ou craquage catalytique en lit fluidisé). La désulfuration (l'hydrodésulfuration) des essences et principalement des essences de FCC est donc d'une importance évidente pour l'atteinte des spécifications.

L'hydrotraitement (hydrodésulfuration) de la charge envoyée au craquage catalytique conduit à des essences contenant typiquement 100 ppm de soufre. Les unités d'hydrotraitement de charges de craquage catalytique opèrent cependant dans des conditions sévères de température et de pression, ce qui suppose un investissement élevé. De plus, la totalité de la charge doit être désulfurée, ce qui entraîne le traitement de volumes de charge très importants.

L'hydrotraitement (ou hydrodésulfuration) des essences de craquage catalytique, lorsqu'il est réalisé dans des conditions classiques connues de l'homme du métier permet de réduire la teneur en soufre de la coupe. Cependant, ce procédé présente l'inconvénient majeur d'entraîner une chute très importante de l'indice d'octane de la coupe, en raison de la saturation de l'ensemble des oléfines au cours de l'hydrotraitement.

La séparation de l'essence légère et de l'essence lourde avant hydrotraitement a déjà été revendiquée dans le brevet US-A- 4 397 739. Ce type de séparation permet de séparer une coupe légère, riche en oléfine, présentant une teneur en soufre faible, qui ne sera plus compatible avec les spécifications futures et une fraction lourde riche appauvrie en oléfine et contenant une proportion importante du soufre de l'essence initiale. Dans ce brevet, il est revendiqué un procédé d'hydrodésulfuration des essences comprenant un fractionnement de l'essence en une fraction légère et une fraction lourde et une hydrodésulfuration spécifique de l'essence lourde, mais il n'est proposé aucune solution pour éliminer le soufre présent dans l'essence légère.

D'autre part, dans le brevet US-A- 4 131 537 est enseigné l'intérêt de fractionner l'essence en plusieurs coupes, de préférence trois, en fonction de leur point d'ébullition, et de les désulfurer dans des conditions qui peuvent être différentes et en présence d'un catalyseur comprenant au moins un métal du groupe VIB et/ou du groupe VIII. Il est indiqué dans ce brevet que le plus grand bénéfice est obtenu lorsqu'on fractionne l'essence en trois coupes, et lorsque la coupe présentant des points d'ébullition intermédiaires est traitée dans des conditions douces.

La demande de brevet EP-A-0 755 995 décrit un procédé de désulfuration d'essences de FCC comprenant au moins deux étapes. La première est une hydrodésulfuration catalytique à une température comprise entre 200 et 350°C, avec un taux de désulfuration compris entre 60 et 90% et est effectuée en présence d'une charge contenant moins de 0,1% en volume de sulfure d'hydrogène (H2S). Le deuxième, ainsi qu'éventuellement les suivantes, sont également des étapes d'hydrodésulfuration catalytique opérées entre 200 et 300°C et en présence d'une charge comprenant moins de 0,05% en volume d'H2S. Le taux de désulfuration est compris entre 60 et 90% dans cette étape. Dans ce procédé, la concentration en H2S doit être maintenue à un niveau très faible. En cas de recyclage de l'hydrogène excédentaire il est donc en général nécessaire d'éliminer l'H2S, par exemple au moyen d'une étape d'absorption aux amines, après la deuxième étape et les suivantes, afin que le gaz de recycle contienne moins de 0,1% volume d' H2S. Il est également préféré d'éliminer l'H2S entre la première et la deuxième étape afin de respecter la teneur maximale en H2S en entrée de la deuxièmme étape (0,05 % volume). Pour les essences chargées en soufre, une telle élimination est donc nécessaire compte tenu du taux de desulfuration supérieur à 60 % en première étape

La demande de brevet EP-A- 0 725 126 décrit un procédé d'hydrodésulfuration d'une essence de craquage dans lequel l'essence est séparée en une pluralité de fractions comprenant au moins une première fraction riche en composés faciles à désulfurer et une seconde fraction riche en composés difficiles à désulfurer. Avant d'effectuer cette séparation, il faut au préalable déterminer la distribution des produits soufrés au moyen d'analyses. Ces analyses sont nécessaires pour sélectionner l'appareillage et les conditions de séparation.

Dans cette demande il est ainsi indiqué qu'une fraction légère d'essence de craquage voit sa teneur en oléfines et son indice d'octane chuter de manière importante lorsqu'elle est désulfurée sans être fractionnée. Par contre, le fractionnement de ladite fraction légère en 7 à 20 fractions suivi d'analyses des teneurs en soufre et en oléfines de ces fractions permet de déterminer la ou les fractions les plus riches en composés soufrés qui sont ensuite désulfurées simultanément ou séparément et mélangées aux autres fractions désulfurées ou non. Une telle procédure est complexe et doit être reproduite à chaque changement de la composition de l'essence à traiter.

Dans la demande de brevet français n°98/14480, il est enseigné l'intérêt de fractionner l'essence en une fraction légère et une fraction lourde puis d'effectuer un hydrotraitement spécifique de l'essence légère sur un catalyseur à base de nickel, et un hydrotraitement de l'essence lourde sur un catalyseur comprenant au moins un métal du groupe VIII et/ou au moins un métal du groupe Vlb.

Il a également été proposé, par exemple dans le brevet US-A- 5 290 427, des procédés d'hydrotraitement des essences consistant à fractionner l'essence, puis à introduire les fractions à différents niveaux d'un réacteur d'hydrodésulfuration et à convertir les fractions désulfurées sur une zéolithe ZSM-5, afin de compenser la perte d'octane enregistrée au moyen d'une isomérisation.

Dans ces procédés, les essences à traiter présentent en général un point initial supérieur à 70°C, et là encore il est nécessaire de traiter séparément l'essence légère (fraction correspondant aux composés de point d'ébullition compris entre les C5 (hydrocarbure à 5 atomes de carbone) et 70°C) par exemple par un adoucissement.
Le brevet US-A-5 318 690 propose un procédé comprenant un fractionnement de l'essence et un adoucissement de l'essence légère, tandis que l'essence lourde est désulfurée, puis convertie sur ZSM-5 et désulfurée à nouveau dans des conditions douces. Cette technique est basée sur une séparation de l'essence brute de façon à obtenir une coupe légère pratiquement dépourvue de composés soufrés autres que les mercaptans. Ceci permet de traiter ladite coupe uniquement au moyen d'un adoucissement qui enlève les mercaptans.

De ce fait, la coupe lourde contient une quantité relativement importante d'oléfines qui sont en partie saturées lors de l'hydrotraitement. Pour compenser la chute de l'indice d'octane liée à l'hydrogénation des oléfines, le brevet préconise un craquage sur zéolithe ZSM-5 qui produit des oléfines, mais au détriment du rendement. De plus, ces oléfines peuvent se recombiner avec l'H₂S présent dans le milieu pour reformer des mercaptans. Il est alors nécessaire d'effectuer un adoucissement ou une hydrodésulfuration supplémentaire.

### Résumé de l'invention :

La présente invention concerne un procédé de production d'essences à faible teneur en soufre, qui permet de valoriser la totalité d'une coupe essence contenant du soufre, de préférence une coupe essence de craquage catalytique, et de réduire les teneurs en soufre dans ladite coupe essence à de très faibles niveaux, sans diminution sensible du rendement en essence tout en minimisant la diminution de l'indice d'octane due à l'hydrogénation des oléfines.

Le procédé selon l'invention est un procédé de production d'essence à faible teneur en soufre, à partir d'une coupe essence contenant du soufre (essence initiale). Il comprend au moins les étapes suivantes:
a1) au moins une hydrogénation sélective des dioléfines présentes dans l'essence initiale,
a2) éventuellement au moins une étape visant à augmenter le poids moléculaire des produits soufrés légers présent dans l'essence . Cette étape peut être éventuellement réalisée simultanément à l'étape a1 sur tout ou partie de l'essence initiale, dans le même réacteur ou un réacteur différent. Elle peut également être effectuée de façon séparée sur tout ou partie de l'essence hydrogénée à l'étape a1.
b) au moins une séparation de l'essence obtenue à l'étape a1 ou a2 en deux fractions (ou coupes), l'une pratiquement dépourvue de soufre et contenant les oléfines les plus légères de l'essence initiale (essence légère ou fraction légère), l'autre dans laquelle la majeure partie des composés soufrés initialement présents dans l'essence initiale est concentrée (essence ou fraction lourde).
c) au moins un traitement de l'essence lourde séparée à l'étape b sur un catalyseur permettant de décomposer ou d'hydrogéner au moins partiellement les composés soufrés insaturés, notamment les composés soufrés cycliques, voire aromatiques tels que par exemple les composés thiophéniques, en se plaçant dans des conditions où l'hydrogénation des oléfines sur ce catalyseur est limitée,
d) au moins un traitement de l'essence lourde obtenue à l'étape c, sans élimination de l'H2S formé au cours de cette étape, sur un catalyseur permettant de décomposer les composés soufrés et plus préférentiellement les composés soufrés saturés linéaires et/ou cycliques, avec une hydrogénation limitée des oléfines.

Ces traitements catalytiques peuvent être réalisés soit dans un seul réacteur contenant les deux catalyseurs, soit dans au moins deux réacteurs différents. Quand le traitement est réalisé à l'aide de deux réacteurs, ces deux derniers sont placés en série, le second réacteur traitant de préférence intégralement l'effluent en sortie du premier réacteur, de préférence sans séparation du liquide et du gaz entre le premier et le second réacteur. Il est également possible d'utiliser plusieurs réacteurs en parallèle ou en série pour l'une et/ou l'autre des étapes c et /ou d.

Par ailleurs, il n'est pas nécessaire d'éliminer l'H2S formé au cours de l'étape c avant d'envoyer l'effluent de cette étape (étape c) à l'entrée du ou des réacteurs d'hydrodésulfuration de l'étape d.

Un des avantages du procédé selon l'invention réside donc dans le fait qu'il n'est pas nécessaire d'ajuster la teneur en H2S entre l'étape c et l'étape d.

Par ailleurs une étape e est de préférence effectuée après l'étape d, cette étape consiste à mélanger l'essence légère séparée à l'étape b et l'essence lourde issue de l'étape d.

De préférence, la totalité de l'essence lourde désulfurée issue de l'étape d est mélangée à l'essence légère issue de l'étape b, sans séparation du liquide et du gaz contenu dans l'essence lourde après désulfuration, éventuellement un simple strippage par un gaz inerte peut être effectué pour éliminer l'H2S de l'essence lourde totalement désulfurée.

Dans certains cas spécifiques, la valorisation de l'essence légère et de l'essence lourde désulfurée s'effectue de manière séparée. Il est alors inutile de réaliser l'étape e.

La charge du procédé selon l'invention est une coupe essence contenant du soufre, de préférence une coupe essence issue d'une unité de craquage catalytique, dont la gamme de points d'ébullition s'étend typiquement depuis environ les points d'ébullitions des hydrocarbures à 5 atomes de carbone (C5) jusqu'à environ 250°C. Le point final de la coupe essence dépend de la raffinerie dont elle est issue et des contraintes du marché, mais reste généralement dans les limites indiquées ci-avant.

### Description détaillée l'invention :

II est décrit dans la présente invention un procédé permettant l'obtention d'une essence préférentiellement issue d'une unité de craquage catalytique et présentant une teneur en soufre limitée dans lequel l'essence subit d'abord un traitement d'hydrogénation sélective des dioléfines, puis éventuellement une étape visant à alourdir les composés soufrés les plus légers de l'essence qui devrait après le fractionnement se trouver dans l'essence légère, puis un traitement de l'essence lourde grâce à l'association d'au moins deux catalyseurs adaptés, au moins un premier catalyseur favorisant la transformation des composés insaturés du soufre présents dans l'essence, tels que par exemple les composés thiophéniques, et au moins un deuxième catalyseur favorisant la transformation sélective des composés saturés du soufre, linéaires ou cycliques déjà présents dans la coupe lourde ou produits lors de la première étape.

Cet enchaînement permet d'obtenir in fine une essence désulfurée sans diminution importante de la teneur en oléfines ou de l'indice d'octane et ce même pour des taux de désulfuration élevés, et ceci sans qu'il soit nécessaire de traiter l'essence légère, ou d'avoir recours à des procédés permettant de restaurer l'indice d'octane de l'essence. Grâce à ce procédé, des taux d'hydrodésulfuration importants sont atteints, dans des conditions opératoires raisonnables précisées ci-aprés.

Les espèces soufrées contenues dans les charges traitées par le procédé de l'invention peuvent être des mercaptans ou des composés hétérocycliques, tels que par exemple les thiophènes ou les alkyl-thiophènes, ou des composés plus lourds, comme par exemple le benzothiophène ou le dibenzothiophène. Lorsque l'essence est fractionnée en deux coupes, une coupe légère riche en oléfines et une coupe lourde appauvrie en oléfines, les composés soufrés légers (par exemple : éthyl mercaptan, propylmercaptan et éventuellement le thiophène) peuvent être en partie voire en totalité présents dans l'essence légère. Il est alors nécessaire d'appliquer un traitement supplémentaire à cette fraction légère pour éliminer le soufre qu'elle contient. De façon conventionnelle, ce traitement est un adoucissement extractif qui permet d'éliminer de l'essence les composés légers du soufre présents sous la forme de mercaptan. Outre le fait que ce traitement alourdit fatalement le coût de l'opération, il n'est opérationnel que si le soufre est sous la forme de mercaptan. Ainsi le point de fractionnement de l'essence sera limité pour ne pas entraîner la présence de thiophène dans l'essence légère. Ce dernier formant des azéotropes avec un certain nombre d'hydrocarbures, on ne pourra séparer dans l'essence légère que les oléfines en C5 et une faible partie des oléfines en C6 sous peine d'entraîner une fraction trop importante de thiophène dans cette coupe.
Pour permettre de recouvrer une fraction plus importante des oléfines présentes dans l'essence légère tout en limitant la teneur en soufre de cette fraction sans traitement supplémentaire, il est proposé de manière préférée de traiter la charge dans des conditions et sur des catalyseurs qui permettent de transformer les composés soufrés légers en composés soufrés de point d'ébullition plus élevés se retrouvant après la séparation, dans l'essence lourde. Cette dernière est désulfurée dans des conditions définies et au moyen d'un enchaînement de catalyseurs permettant d'atteindre des taux de désulfuration élevés tout en limitant le taux d'hydrogénation des oléfines et donc la perte en octane.

La teneur en soufre des coupes essences produites par craquage catalytique (FCC) dépend de la teneur en soufre de la charge traitée au FCC, ainsi que du point final de la coupe. Généralement, les teneurs en soufre de l'intégralité d'une coupe essence, notamment celles provenant du FCC, sont supérieures à 100 ppm en poids et la plupart du temps supérieures à 500 ppm en poids. Pour des essences ayant des points finaux supérieurs à 200°C, les teneurs en soufre sont souvent supérieures à 1000 ppm en poids, elles peuvent même dans certains cas atteindre des valeurs de l'ordre de 4000 à 5000 ppm en poids.
Le procédé selon l'invention s'applique notamment lorsque des taux de désulfuration élevés de l'essence sont requis, c'est à dire lorsque l'essence désulfurée doit contenir au plus 10 % du soufre de l'essence initiale et éventuellement au plus 5 % voire au plus 2 % du soufre de l'essence initiale ce qui correspond à des taux de désulfuration supérieurs à 90 % voire supérieurs à 95 ou à 98 %.
Le procédé selon l'invention comprend au moins les étapes suivantes:
a1) au moins une étape effectuée par passage de la charge, constituée de préférence par l'ensemble de la coupe essence, sur un catalyseur permettant d'hydrogéner sélectivement les dioléfines de l'essence sans hydrogéner les oléfines,
a2) éventuellement au moins une étape optionnelle consistant à passer tout ou partie de l'essence initiale ou de l'essence hydrogénée à l'étape a1, de préférence l'ensemble de l'essence initiale ou hydrogénée à l'étape a1, sur un catalyseur permettant de transformer au moins en partie les composés soufrés légers (par exemple : ethylmercaptan, propyl mercaptan, thiophène) ou tout ou partie des oléfines en composés soufrés plus lourds. Cette étape est de préférence réalisée simultanément à l'étape a1 en passant par exemple l'essence initiale sur un catalyseur capable à la fois d'hydrogéner les dioléfines et de transformer les composés soufrés légers ou les oléfines en composés soufrés plus lourds, ou sur un catalyseur distinct mais permettant de réaliser cette transformation dans le même réacteur que l'étape a1. Il est éventellement possible d'observer sur certains types de charges une augmentation des mercaptans à l'issu de a1) ou a2), cette augmentation de mercaptans est probablement due à une hydrogenolyse des disulfures de poids moléculaire élevé.
b) au moins une étape visant à séparer l'essence initiale en une essence légère et une essence lourde. Le point de coupe de l'essence légère et de l'essence lourde est déterminé afin de limiter la teneur en soufre de l'essence légère et de permettre son utilisation dans le pool essence de préférence sans post traitement supplémentaire;
c) au moins une étape comprenant le traitement d'au moins une partie de l'essence lourde de l'essence sur un catalyseur permettant la transformation d'au moins une partie des composés soufrés insaturés présents dans ladite charge, tels que par exemple les composés thiophéniques, en composés saturés, tels que par exemple les thiophanes (ou thiacyclopentane) ou les mercaptans, selon une succession de réactions décrites ci-après: 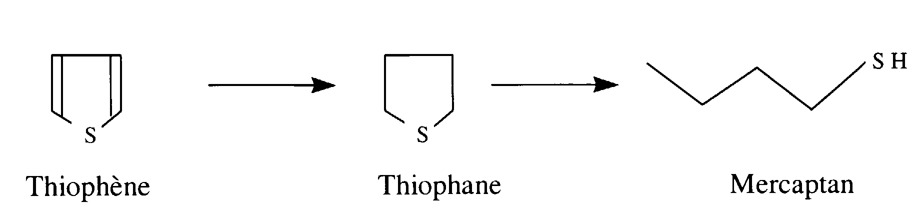
   La réaction de décomposition totale avec libération d'H₂S est également possible.
   Cette réaction d'hydrogénation peut être réalisée sur tout catalyseur favorisant ces réactions tel que par exemple un catalyseur comprenant au moins un métal du groupe VIII et/ou au moins un métal du groupe Vlb, de préférence au moins en partie sous la forme de sulfures. Quand un tel catalyseur est utilisé, les conditions opératoires sont ajustées afin de pouvoir hydrogéner au moins en partie les composés saturés, tels que les composés thiophéniques, tout en limitant l'hydrogénation des oléfines.
d) au moins une étape dans laquelle les composés saturés soufrés présents dans l'essence initiale ou obtenus à l'étape c sont convertis en H2S selon les exemples de réactions :

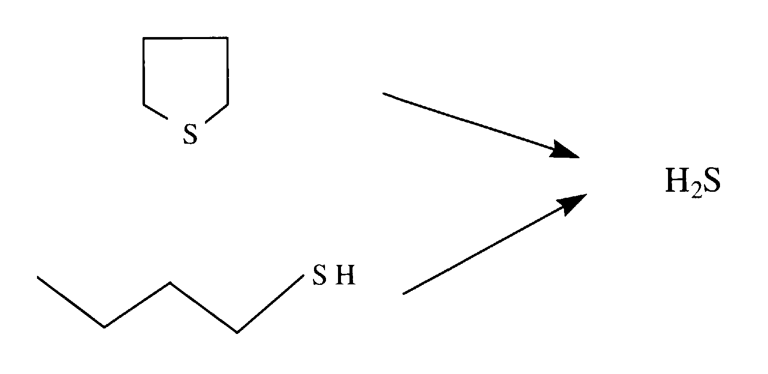

Ce traitement peut être réalisé sur tout catalyseur permettant la conversion des composés saturés du soufre (principalement les composés de type thiophanes ou de type mercaptans). Il peut par exemple être effectué sur un catalyseur à base de nickel, de molybdène, ou de cobalt.

L'essence lourde ainsi désulfurée est ensuite éventuellement strippée (c'est-à-dire qu'un courant gazeux, de préférence contenant un ou des gaz inertes est passé au travers de cette essence), afin d'éliminer l'H₂S produit lors de la hydrodésulfuration. L'essence légère séparée à l'étape b et l'essence lourde désulfurée à l'étape d peuvent ensuite soit éventuellement être mélangées (étape e) et envoyées dans le pool essence de la raffinerie, soit valorisées séparément sans être mélangées.

Un des avantages du procédé selon l'invention réside dans le fait qu'il n'est pas nécessaire d'ajuster la teneur en H2S entre l'étape c et l'étape d. L'effluent issue de l'étape c peut être envoyé directement à l'étape d sans ajustement de la teneur en H2S, et de préférence sans aucune séparation du liquide et du gaz ou élimination intermédiaire de composés contenus dans cet effluent. Des taux d'hydrodésulfurations élevés sont en effet atteint en présence d'H2S dans la charge de l'étape d à des teneurs généralement supérieures à 0,07% volume, voire même supérieures à 0,1%volume.

Les étapes du procédé selon l'invention sont décrites plus en détail ci après.

### - Hydrogénation des dioléfines (étape a1):

L'hydrogénation des diènes est une étape qui permet d'éliminer, avant hydrodésulfuration, la presque totalité des diènes présents dans la coupe essence contenant du soufre à traiter. Elle se déroule préférentiellement en première étape (étape a1) du procédé selon l'invention, généralement en présence d'un catalyseur comprenant au moins un métal du groupe VIII, de préférence choisi dans le groupe formé par le platine, le palladium et le nickel, et un support. On emploiera par exemple un catalyseur à base de nickel ou de palladium déposé sur un support inerte, tel que par exemple de l'alumine, de la silice ou un support contenant au moins 50 % d'alumine.

La pression employée est suffisante pour maintenir plus de 60 %, de préférence 80 %, et de manière plus préférée de 95 % en poids de l'essence à traiter en phase liquide dans le réacteur ; elle est le plus généralement comprise entre environ 0,4 et environ 5 MPa et de préférence supérieure à 1 MPa, de manière plus préférée comprise entre 1 et 4 MPa. La vitesse spatiale horaire du liquide à traiter est comprise entre environ 1 et environ 20 h⁻¹(volume de charge par volume de catalyseur et par heure), de préférence entre 4 et 10 h⁻¹, de manière très préférée entre 5 et 8 h⁻¹. La température est comprise le plus généralement entre environ 50 et environ 250 °C, et de préférence entre 80 et 200 °C, et de manière plus préférée entre 100 et 190 °C, pour assurer une conversion suffisante des dioléfines. De façon très préférée elle est limitée à 180°C. Le rapport hydrogène sur charge exprimé en litre est généralement compris entre 5 et 50 litres par par litre, de préférence entre 8 et 30 litres par litre.

Le choix des conditions opératoires est particulièrement important. On opérera le plus généralement sous pression et en présence d'une quantité d'hydrogène en faible excès par rapport à la valeur stoechiométrique nécessaire pour hydrogéner les dioléfines. L'hydrogène et la charge à traiter sont injectés en courants ascendants ou descendants dans un réacteur comprenant de préférence un lit fixe de catalyseur.

Un autre métal peut être associé au métal principal pour former un catalyseur bimétallique, tel que par exemple le molybdène ou le tungstène. L'utilisation de telles formules catalytiques a par exemple été revendiquée dans le brevet FR 2 764 299.

L'essence de craquage catalytique peut contenir jusqu'à quelques % poids de dioléfines. Après hydrogénation, la teneur en dioléfines est généralement réduite à moins de 3000 ppm, voire moins de 2500 ppm et de manière plus préférée moins de 1500 ppm. Dans certains cas, il peut être obtenu moins de 500 ppm. La teneur en diènes après hydrogénation sélective peut même si nécessaire être réduite à moins de 250 ppm.

Selon une réalisation particulière du procédé selon l'invention, l'étape d'hydrogénation des diènes se déroule dans un réacteur catalytique d'hydrogénation qui comprend une zone réactionnelle catalytique traversée par la totalité de la charge et la quantité d'hydrogène nécessaire pour effectuer les réactions désirées.

### Transformation des composés légers du soufre en composés plus lourds (étape a2):

Cette étape optionnelle consiste à transformer les composés légers du soufre, qui à l'issue de l'étape b de séparation se trouveraient dans l'essence légère, en composés soufrés plus lourds entraînés dans l'essence lourde. Elle s'effectue préférentiellement sur un catalyseur comprenant au moins un élément du groupe VIII (groupes 8,9 et 10 de la nouvelle classification périodique), ou comprenant une résine.

Cette étape optionnelle peut être éventuellement réalisée en même temps que l'étape a1. Par exemple, il peut être particulièrement avantageux d'opérer, lors de l'hydrogénation des dioléfines, dans des conditions telles qu'au moins une partie des composés sous forme de mercaptan soient transformés. Ainsi une certaine réduction de la teneur en mercaptans est obtenue. Pour ce faire, on peut utiliser la procédure d'hydrogénation des diènes décrite dans la demande de brevet EP-A-0 832 958, qui utilise avantageusement un catalyseur à base de palladium, ou celle décrite dans le brevet FR 2 720 754.
Une autre possibilité est d'utiliser un catalyseur à base de nickel identique ou différent du catalyseur de l'étape a1, tel que par exemple le catalyseur préconisé dans le procédé du brevet US-A-3 691 066, qui permet de transformer les mercaptans (butylmercaptan) en composés soufrés plus lourd (méthyl thiophène).
Une autre possibilité pour réaliser cette étape, consiste à hydrogéner au moins en partie le thiophène en thiophane dont le point d'ébullition est supérieur à celui du thiophène (point d'ébullition 121°C). Cette étape peut être réalisée sur un catalyseur à base de nickel, de platine ou de palladium. Dans ce cas les températures sont généralement comprises entre 100 et 300°C et de préférence entre 150 et 250°C. Le rapport H2/charge est ajusté entre 5 et 20 litres par litres, de préférence entre 5 et 15 litres par litres, pour permettre l'hydrogénation désirée des composés thiophéniques tout en minimisant l'hydrogénation des oléfines présentes dans la charge. La vitesse spatiale est généralement comprise entre 1 et 10 h⁻¹, de préférence entre 2 et 4 h⁻¹ et la pression comprise entre 0,5 et 5 MPa, de préférence entre 1 et 3 MPa.
Une autre possibilité de réaliser cette étape consiste à faire passer l'essence sur un catalyseur présentant une fonction acide qui permet de réaliser l'addition des composés soufrés sous forme de mercaptans sur les oléfines et de réaliser la réaction d'alkylation du thiophène par ces mêmes oléfines. Cette étape peut par exemple être réalisé en faisant passer l'essence à traiter sur une résine de type Amberlyst 15. Les conditions d'opération seront ajustées pour réaliser la transformation désirée tout en limitant les réactions parasites d'oligomérisation des oléfines. On opère généralement en présence d'une phase liquide, à une température comprise entre 10 et 150°C et de préférence entre 10 et 70°C. La pression opératoire est comprise entre 0,1 et 2 MPa et de préférence entre 0,5 et 1 MPa. La vitesse spatial est généralement comprise entre 0,5 et 10 h⁻¹ et de préférence entre 0,5 et 5 h-1. Dans cette étape le taux de conversion des mercaptans est généralement supérieur à 50 % et le taux de transformation du thiophène est généralement supérieur à 20 %.

Pour minimiser l'activité oligomérisante du catalyseur acide éventuellement utilisé, l'essence peut être additivée d'un composé connu pour inhiber l'activité oligomérisante des catalyseurs acides tel que les alcools, les éthers ou l'eau.

### - séparation de l'essence en deux fractions (étape b):

Dans cette étape l'essence est fractionnée en deux fractions :
- une fraction légère contenant une teneur en soufre résiduelle limitée permettant d'utiliser cette coupe de préférence sans autre traitement visant à diminuer sa teneur en soufre ;
- une fraction lourde dans laquelle la majeure partie du soufre, initialement présent dans la charge est concentrée.

Cette séparation est réalisée de préférence au moyen d'une colonne de distillation classique appelée aussi splitter. Cette colonne de fractionnement doit permettre de séparer une fraction légère de l'essence contenant une faible fraction du soufre et une fraction lourde contenant la majeure partie du soufre initialement présent dans l'essence initiale.
Cette colonne opère généralement à une pression comprise entre 0,1 et 2 MPa et de préférence entre 0,2 et 1 MPa. Le nombre de plateaux théoriques de cette colonne de séparation est généralement compris entre 10 et 100 et de préférence entre 20 et 60. Le taux de reflux, exprimé comme étant le rapport du trafic liquide dans la colonne divisé par le débit de distillat exprimé en kg/h, est généralement inférieur à l'unité et de préférence inférieur à 0,8.
L'essence légère obtenue à l'issue de la séparation contient généralement au moins l'ensemble des oléfines en C5, de préférence les composés en C5 et au moins 20 % des oléfines en C6. Généralement, cette fraction légère présente une faible teneur en soufre, c'est à dire qu'il n'est pas en général nécessaire de traiter la coupe légère avant de l'utiliser comme carburant.
Toutefois, dans certains cas cas extrêmes, un adoucissement de l'essence légère peut être envisagé.

### - Hydrogénation des composés insaturés du soufre (étape c):

Cette étape, qui s'applique à l'essence lourde obtenue à l'issue de l'étape b de séparation, consiste à transformer au moins une partie des composés insaturés du soufre tels que les composés thiophéniques, en composés saturés par exemple en thiophanes (ou thiacyclopentanes) ou en mercaptans, ou encore à hydrogénolyser au moins partiellement ces composés soufrés insaturés pour former de l'H₂S.
Cette étape peut par exemple être réalisée par passage de l'essence lourde, en présence d'hydrogène, sur un catalyseur comprenant au moins un élément du groupe VIII et/ou au moins un élément du groupe Vlb au moins en partie sous forme sulfure, à une température comprise entre environ 210°C et environ 320°C, de préférence entre 220°C et 290°C, sous une pression généralement comprise entre environ 1 et environ 4 MPa, de préférence entre 1,5 et 3 MPa. La vitesse spatiale du liquide est comprise entre environ 1 et environ 20 h⁻¹ (exprimée en volume de liquide par volume de catalyseur et par heure), de préférence entre 1 et 10 h-1, de manière très préférée entre 3 et 8 h-1. Le rapport H₂/HC est compris entre 100 à 600 litres par litre et préférentiellement entre 300 et 600 litres par litre.

Pour réaliser, au moins en partie, l'hydrogénation des composés soufrés insaturés de l'essence selon le procédé de l'invention, on utilise en général au moins un catalyseur, comprenant au moins un élément du groupe VIII (métaux des groupes 8, 9 et 10 de la nouvelle classification, c'est-à-dire le fer, le ruthénium, l'osmium, le cobalt, le rhodium, l'iridium, le nickel, le palladium ou le platine) et/ou au moins un élément du groupe Vlb (métaux du groupe 6 de la nouvelle classification, c'est-à-dire le chrome, le molybdène ou le tungstène), sur un support approprié.

La teneur en métal du groupe VIII exprimée en oxyde est généralement comprise entre 0,5 et 15 % poids, préférentiellement entre 1 et 10 % poids. La teneur en métal du groupe Vlb est généralement comprise entre 1,5 et 60 % poids, préférentiellement entre 3 et 50 % poids.

L'élément du groupe VIII, lorsqu'il est présent, est de préférence le cobalt, et l'élément du groupe Vlb, lorsqu'il est présent, est généralement le molybdène ou le tungstène. Des combinaisons telles que cobalt-molybdène sont préférées. Le support du catalyseur est habituellement un solide poreux, tel que par exemple une alumine, une silice-alumine ou d'autres solides poreux, tels que par exemple de la magnésie, de la silice ou de l'oxyde de titane, seuls ou en mélange avec de l'alumine ou de la silice-alumine. Pour minimiser l'hydrogénation des oléfines présentes dans l'essence lourde il est avantageux d'utiliser préférentiellement un catalyseur dans lequel la densité de molybdène, exprimée en % poids de MoO3 par unité de surface est supérieure à 0,07 et de préférence supérieure à 0,10. Le catalyseur selon l'invention présente de préférence une surface spécifique inférieure à 190 m2/g, de manière plus préférée inférieure à 180m2/g, et de manière très préférée inférieure à 150 m2/g.

Après introduction du ou des éléments et éventuellement mise en forme du catalyseur (lorsque cette étape est réalisée sur un mélange contenant déjà les éléments de base), le catalyseur est dans une première étape activé. Cette activation peut correspondre soit à une oxydation puis à une réduction, soit à une réduction directe, soit à une calcination uniquement. L'étape de calcination est généralement réalisée à des températures allant d'environ 100 à environ 600 °C et de préférence comprises entre 200 et 450 °C, sous un débit d'air. L'étape de réduction est réalisée dans des conditions permettant de convertir au moins une partie des formes oxydées du métal de base en métal. Généralement, elle consiste à traiter le catalyseur sous un flux d'hydrogène à une température de préférence au moins égale à 300°C. La réduction peut aussi être réalisée en partie au moyen de réducteurs chimiques.

Le catalyseur est de préférence utilisé au moins en partie sous sa forme sulfurée. L'introduction du soufre peut intervenir avant ou après toute étape d'activation, c'est-à-dire de calcination ou de réduction. De préférence, aucune étape d'oxydation n'est réalisée lorsque le soufre ou un composé soufré a été introduit sur le catalyseur. Le soufre ou un composé soufré peut être introduit *ex situ,* c'est-à-dire en dehors du réacteur où le procédé selon l'invention est réalisé, ou *in situ,* c'est-à-dire dans le réacteur utilisé pour le procédé selon l'invention. Dans ce dernier cas, le catalyseur est de préférence réduit dans les conditions décrites précédemment, puis sulfuré par passage d'une charge contenant au moins un composé soufré, qui une fois décomposé conduit à la fixation de soufre sur le catalyseur. Cette charge peut être gazeuse ou liquide, par exemple de l'hydrogène contenant de l'H₂S, ou un liquide contenant au moins un composé soufré.

D'une façon préférée, le composé soufré est ajouté sur le catalyseur *ex situ.* Par exemple, après l'étape de calcination, un composé soufré peut être introduit sur le catalyseur en présence éventuellement d'un autre composé. Le catalyseur est ensuite séché, puis transféré dans le réacteur servant à mettre en oeuvre le procédé selon l'invention. Dans ce réacteur, le catalyseur est alors traité sous hydrogène afin de transformer au moins une partie du métal principal en sulfure. Une procédure qui convient particulièrement à l'invention est celle décrite dans les brevets FR-B-2 708 596 et FR-B-2 708 597.

Dans le procédé selon l'invention la conversion des composés soufrés insaturés est supérieure à 15 % et de préférence supérieure à 50 %. Dans le même temps le taux d'hydrogénation des oléfines est de préférence inférieur à 50 %, de façon plus préférée inférieure à 40 %, et de manière très préférée inférieure à 35 %, au cours de cette étape.
L'effluent issu de cette première étape d'hydrogénation est ensuite envoyé, de préférence sans aucune séparation du liquide et du gaz vers l'étape d) qui permet de décomposer les composés soufrés saturés en H2S.

### - Décomposition des composés saturés du soufre (étape d) :

Dans cette étape, les composés saturés du soufre sont transformés en présence d'hydrogène, sur un catalyseur adapté. La décomposition des composés insaturés non hydrogénés lors de l'étape c peut également avoir lieu simultanément. Cette transformation est réalisée, sans hydrogénation importante des oléfines, c'est à dire qu'au cours de cette étape l'hydrogénation des oléfines est généralement limitée à 20 % en volume par rapport à la teneur en oléfines de l'essence initiale, et de préférence, limitée à 10 % en volume par rapport à la teneur en oléfines de l'essence initiale.

Les catalyseurs qui peuvent convenir à cette étape du procédé selon l'invention, sans que cette liste soit limitative, sont des catalyseurs comprenant généralement au moins un élément de base choisi parmi les éléments du groupe VIII, et de préférence choisi dans le groupe formé par le nickel, le cobalt, le fer, le molybdène, le tungstène. Ces métaux peuvent être utilisés seuls ou en combinaison, ils sont de préférence supportés et utilisés sous leur forme sulfurée. Le catalyseur de l'étape d est de préférence de nature et/ou de composition différente de celui utilisé dans l'étape c.
La teneur en métal de base du catalyseur selon l'invention est généralement comprise entre environ 1 et environ 60 % poids, de préférence entre 5 et 20 % poids, et de manière très préférée entre 5 et 9% poids. De façon préférée, le catalyseur est généralement mis en forme, de préférence sous forme de billes, de pastilles, d'extrudés, par exemple de trilobes. Le métal peut être incorporé au catalyseur par dépôt sur le support préformé, il peut également être mélangé avec le support avant l'étape de mise en forme. Le métal est généralement introduit sous forme d'un sel précurseur, généralement soluble dans l'eau, tel que par exemple les nitrates, les heptamolybdates. Ce mode d'introduction n'est pas spécifique à l'invention. Tout autre mode d'introduction connu de l'homme du métier peut convenir.

Les supports des catalyseurs utilisés dans cette étape du procédé selon l'invention sont généralement des solides poreux choisis parmi les oxydes réfractaires, tels que par exemple, les alumines, les silices et les silices-alumines, la magnésie, ainsi que l'oxyde de titane et l'oxyde de zinc, ces derniers oxydes pouvant être utilisés seuls ou en mélange avec de l'alumine ou de la silice-alumine. De préférence, les supports sont des alumines de transition ou des silices dont la surface spécifique est comprise en 25 et 350 m²/g. Les composés naturels, tels que par exemple le kieselguhr ou le kaolin, peuvent également convenir comme supports des catalyseurs utilisés dans cette étape du procédé.

Après introduction du métal de base et éventuellement mise en forme du catalyseur (lorsque cette étape est réalisée à partir d'un mélange contenant déjà le métal de base), le catalyseur est dans une première étape activé. Cette activation peut correspondre soit à une oxydation, puis à une réduction, soit à une réduction directe, soit encore uniquement à une calcination. L'étape de calcination est généralement réalisée à des températures allant d'environ 100 à environ 600 °C et de préférence comprises entre 200 et 450 °C, sous un débit d'air. L'étape de réduction est réalisée dans des conditions permettant de convertir au moins une partie des formes oxydées du métal de base en métal. Généralement, elle consiste à traiter le catalyseur sous un flux d'hydrogène à une température au moins égale à 300 °C. La réduction peut aussi être réalisée en partie au moyen de réducteurs chimiques.
Le catalyseur est de préférence utilisé au moins en partie sous sa forme sulfurée. Ceci présente l'avantage de limiter au maximum les risques d'hydrogénation des composés insaturés tels que les oléfines ou les composés aromatiques pendant la phase de démarrage. L'introduction du soufre peut intervenir entre différentes étapes d'activation. De préférence, aucune étape d'oxydation n'est réalisée lorsque le soufre ou un composé soufré est introduit sur le catalyseur. Le soufre ou un composé soufré peut être introduit *ex situ,* c'est-à-dire en dehors du réacteur où le procédé selon l'invention est réalisé, ou *in situ,* c'est-à-dire dans le réacteur utilisé pour le procédé selon l'invention. Dans ce dernier cas, le catalyseur est de préférence réduit dans les conditions décrites précédemment, puis sulfuré par passage d'une charge contenant au moins un composé soufré, qui une fois décomposé conduit à la fixation de soufre sur le catalyseur. Cette charge peut être gazeuse ou liquide, par exemple de l'hydrogène contenant de l'H₂S, ou un liquide contenant au moins un composé soufré.
D'une façon préférée, le composé soufré est ajouté sur le catalyseur *ex situ.* Par exemple, après l'étape de calcination, un composé soufré peut être introduit sur le catalyseur en présence éventuellement d'un autre composé. Le catalyseur est ensuite séché, puis transféré dans le réacteur servant à mettre en oeuvre le procédé de l'invention. Dans ce réacteur, le catalyseur est alors traité sous hydrogène afin de transformer au moins une partie du métal principal en sulfure. Une procédure qui convient particulièrement à l'invention est celle décrite dans les brevets FR-B-2 708 596 et FR-B-2 708 597.
Après sulfuration, la teneur en soufre du catalyseur est en général comprise entre 0,5 et 25 % poids, de préférence entre 4 et 20 % poids et de manière très préférée entre 4 et 10 % poids.

L'hydrodésulfuration réalisée au cours de cette étape a pour but de convertir en H2S les composés soufrés saturés de l'essence qui ont déjà subi au moins une l'hydrogénation préalable des composés insaturés du soufre lors de l'étape c. Elle permet d'obtenir un effluent répondant aux spécifications désirées en terme de teneur en composés soufrés. L'essence ainsi obtenue ne présente qu'une perte d'octane faible.

Le traitement visant à décomposer les composés soufrés saturés issus de l'étape c du procédé est effectué en présence d'hydrogène, avec le catalyseur comprenant au moins un métal de base choisi dans le groupe formé par le nickel, le cobalt, le fer, le molybdène, le tungstène, à une température comprise entre environ 280°C et environ 400°C, de préférence entre environ 290°C et environ 380°C, de manière plus préférée entre 310°C et 360°C, et de manière très préférée entre 320°C et 350°C, sous une pression généralement comprise entre environ 0,5 et environ 5 MPa, de préférence comprise entre 1 et 3MPa, de manière plus préférée entre 1,5 et 3 MPa. La vitesse spatiale du liquide est comprise entre environ 0,5 et environ 10 h⁻¹ (exprimée en volume de liquide par volume de catalyseur et par heure), de préférence entre 1 et 8 h⁻¹. Le rapport H₂/HC est ajusté en fonction des taux d'hydrodésulfuration désirés dans la gamme comprise entre environ 100 et environ 600 litres par litres, de préférence entre 100 et 300 litres par litres. Tout ou partie de cet hydrogène peut éventuellement provenir de l'étape c (hydrogène non converti) ou d'un recyclage de l'hydrogène non consommé dans les étapes a1, a2 ou d.
Il a été trouvé que la mise en oeuvre de ce second catalyseur dans cette étape, dans des conditions opératoires particulières, permet de décomposer les composés saturés, contenus dans l'effluent issu de l'étape c, en H2S. Cette mise en oeuvre permet d'atteindre un niveau global élevé d'hydrodésulfuration à l'issu de l'ensemble des étapes du procédé selon l'invention, tout en minimisant la perte en octane résultant de la saturation des oléfines, car la conversion des oléfines au cours de l'étape d est généralement limitée à au plus 20 % en volume des oléfines, de préférence au plus 10 % en volume. De plus, il n'est généralement pas nécessaire de traiter l'essence légère, ce qui limite également les pertes en oléfines.

En conclusion, le procédé selon l'invention est un procédé de production d'essence à faible teneur en soufre comprenant au moins les étapes suivantes :
a1) au moins une hydrogénation sélective des dioléfines présentes dans l'essence initiale,
a2) éventuellement au moins une étape visant à augmenter le poids moléculaire des produits soufrés légers présent dans l'essence. Cette étape peut être éventuellement réalisée simultanément à l'étape a1 sur tout ou partie de l'essence initiale, dans le même réacteur ou un réacteur différent. Elle peut également être effectuée de façon séparée sur tout ou partie de l'essence hydrogénée à l'étape a1.
b) au moins une séparation de l'essence obtenue à l'étape a1 ou a2 en deux fractions, l'une pratiquement dépourvue de soufre et contenant les oléfines les plus légères de l'essence initiale (essence légère), l'autre dans laquelle la majeure partie des composés soufrés initialement présents dans l'essence initiale est concentrée (essence lourde).
c) au moins un traitement de l'essence lourde séparée à l'étape b sur un catalyseur permettant de décomposer ou d'hydrogéner au moins partiellement les composés soufrés insaturés, dans des conditions où l'hydrogénation des oléfines sur ce catalyseur est limitée,
d) au moins un traitement de l'essence lourde obtenue à l'étape c, sans élimination de l'H2S formé au cours de cette étape, sur un catalyseur permettant de décomposer les composés soufrés insaturés non hydrogénés en c et plus préférentiellement les composés soufrés saturés linéaires et/ou cycliques, avec une hydrogénation limitée des oléfines.

Le procédé selon l'inventionpeut comprendre en outre au moins une étape a2 visant à augmenter le poids moléculaire des produits soufrés légers présent dans l'essence.

Eventuellement, et de préférence, les étapes a1 et a2 du procédé selon l'invention sont réalisées simultanément dans le même réacteur et sur un même catalyseur.

Il a été trouvé que la mise en oeuvre de ce second catalyseur dans cette étape, dans des conditions opératoires particulières, permet de décomposer les composés saturés, contenus dans l'effluent issu de l'étape précédente, en H2S. Cette mise en oeuvre permet d'atteindre un niveau global élevé d'hydrodésulfuration à l'issu de l'ensemble des étapes du procédé selon l'invention, tout en minimisant la perte en octane résultant de la saturation des oléfines, car la conversion des oléfines au cours de l'étape d) est généralement limitée à au plus 20 % en volume des oléfines, de préférence au plus 10 % en volume.

### Exemple 1.

Une essence issue d'une unité de craquage catalytique dont les caractéristiques sont indiquées dans le tableau 1 (essence initiale) est séparée en deux fractions, une fraction légère dont le point de coupe correspond à une température de 63°C et une fraction lourde. L'essence légère représente 25 % poids de l'essence initiale et regroupe 88 % des composés oléfiniques ayant 5 atomes de carbone qui étaient présents dans l'essence initiale et 23 % des oléfines ayant 6 atomes de carbone.

Les caractéristiques de la colonne de séparation sont les suivantes : 30 plateaux théoriques, pression au ballon de reflux = 0,5 MPa, température de l'alimentation 100°C.
Les caractéristiques de l'essence légère et de l'essence lourde sont présentées dans le tableau 1.

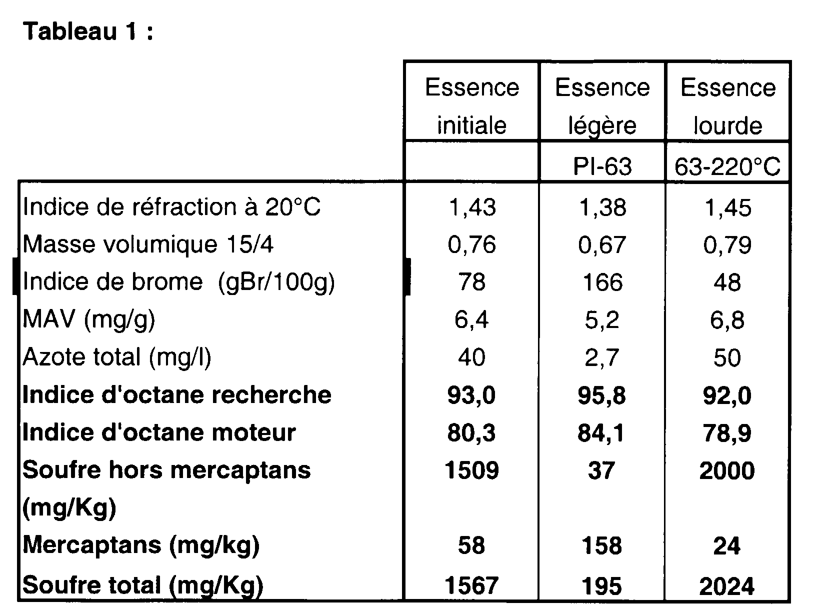

Ces résultats montrent que l'essence légère contient une teneur en dioléfines élevée, qui peut nécessiter un post-traitement d'hydrogénation avant son utilisation et surtout une teneur en soufre sous forme de mercaptans qui nécessite un traitement supplémentaire indispensable avant son utilisation.

### Exemple 2.

L'essence issue d'une unité de craquage catalytique dont les caractéristiques sont décrites dans l'exemple 1 est soumise à un traitement d'hydrogénation des dioléfines dans des conditions où les composés légers soufrés présents dans la charge sont en partie convertis en composés plus lourds (étapes a1 et a2 simultanées).
Ce traitement est réalisé dans un réacteur fonctionnant en continu et en courant ascendant. Le catalyseur est à base de nickel et de molybdène (catalyseur HR945 commercialisé par la société procatalyse). La réaction est conduite à 160°C sous une pression totale de 1,3 MPa, avec une vitesse spatiale de 6 h⁻¹. Le rapport H2/charge, exprimé en litre d'hydrogène par litre de charge et de 10.
Les caractéristiques de l'effluent après hydrogénation des dioléfines et conversion des composés légers présents dans l'essence sont indiquées dans le tableau 2.

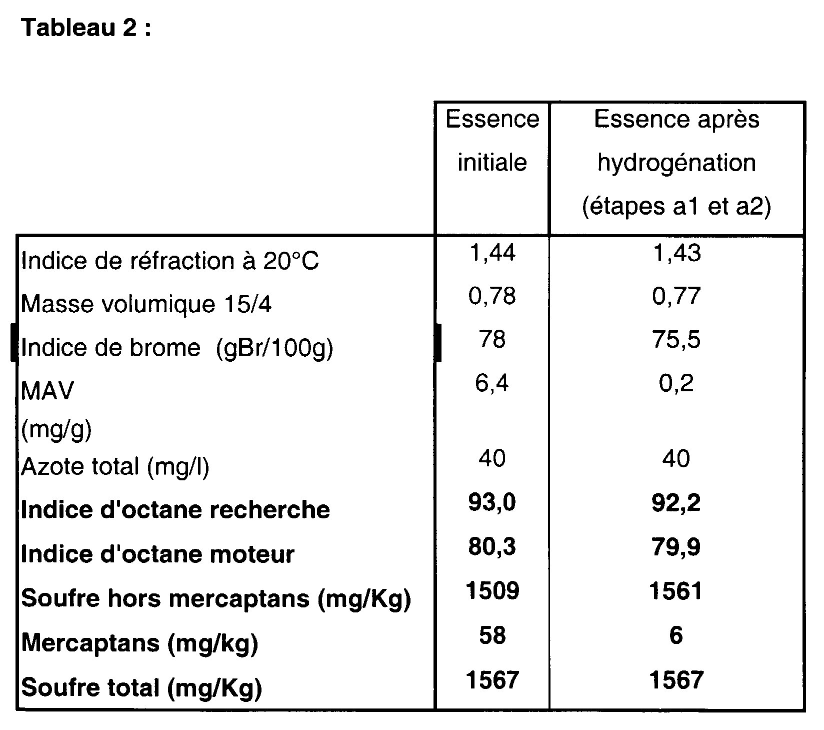

A l'issue de ce traitement l'essence est séparée en deux fractions dans les conditions décrites dans l'exemple 1 (étape b).

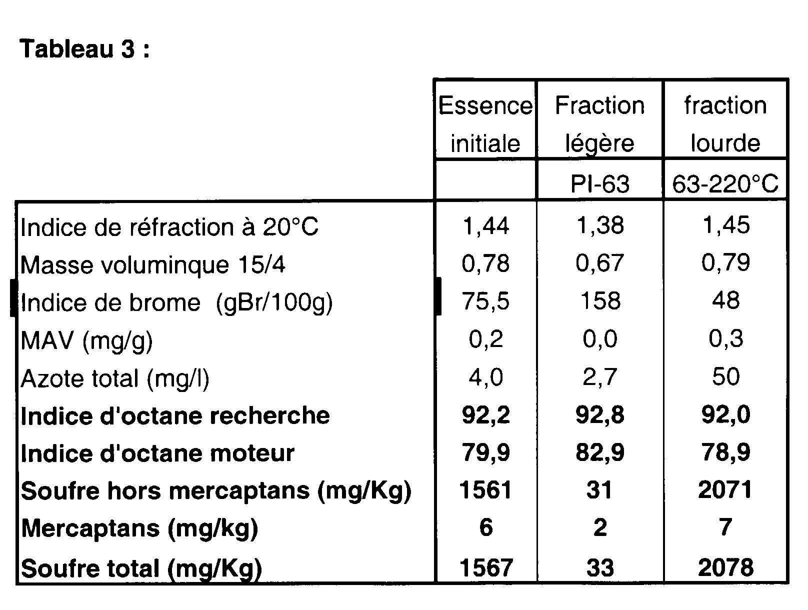

A l'issue de cette séparation, l'essence légère présente une teneur en soufre, en mercaptan et en dioléfine telle qu'il n'est plus nécessaire de réaliser un traitement supplémentaire de cette fraction avant de l'utiliser.
L'essence lourde est soumise à une hydrodésulfuration sur un enchaînement de catalyseurs en réacteur tubulaire isotherme.
Le premier catalyseur (catalyseur A, étape c) est obtenu par imprégnation « sans excès de solution » d'une alumine de transition, se présentant sous forme de billes, de surface spécifique de 130 m2/g et de volume poreux de 0,9 ml/g, par une solution aqueuse contenant du molybdène et du cobalt sous forme d'heptamolybdate d'ammonium et de nitrate de cobalt . Le catalyseur est ensuite séché et calciné sous air à 500°C. La teneur en cobalt et en molybdène de cette échantillon est de 3 % de CoO et 14 % de MoO3.
Le second catalyseur (catalyseur B, étape d) est préparé à partir d'une alumine de transition de 140 m²/g se présentant sous forme de billes de 2 mm de diamètre. Le volume poreux est de 1 ml/g de support.1 kilogramme de support est imprégné par 1 litre de solution de nitrate de nickel. Le catalyseur est ensuite séché à 120°C et calciné sous courant d'air à 400°C pendant une heure. La teneur en nickel du catalyseur est de 20 % poids.
25 ml du catalyseur A, et 50 ml du catalyseur B, sont placés dans un même réacteur d'hydrodésulfuration, de manièe à ce que la charge à traiter (fraction lourde) rencontre tout d'abord le catalyseur A (étape c) puis le catalyseur B (étape d). Une zone de prélèvement de l'effluent issu de l'étape c est prévue entre les catalyseur A et B. Les catalyseurs sont tout d'abord sulfurés par traitement pendant 4 heures sous une pression de 3,4 MPa à 350°C, au contact d'une charge constituée de 2% de soufre sous forme de diméthyldisulfure dans du n-heptane.

Les conditions opératoires de l'hydrodésulfuration sont les suivantes : VVH = 1.33 h⁻¹ par rapport à l'ensemble du lit catalytique H₂/HC = 400 I/I, P = 2,0 MPa. La température de la zone catalytique comprenant le catalyseur A est de 240°C, la température de la zone catalytique contenant le catalyseur B est de 330°C. Les caractéristiques des l'effluents ainsi obtenus sont présentées dans le tableau 4.

**Tableau 4**

| Caractéristiques de l'essence lourde après hydrodésulfuration | | | |
|---|---|---|---|
| | Essence lourde | Essence lourde partiellement désulfurée (étape c) | Essence lourde totalement désulfurée (étape d) |
| S total (ppm) | 2078,0 | 539,0 | 122,0 |
| S RSH (ppm) | 7,0 | 323,0 | 31,0 |
| Indice de brome (gBr/100g) | 48,0 | 36,0 | 34,5 |
| RON | 92,0 | 87,2 | 87,1 |
| MON | 78,9 | 76,3 | 76,5 |
| H₂S (% Vol.) | | 0,14 | 0,18 |

L'essence lourde désulfurée et l'essence légère sont ensuite remélangées pour constituer une essence totale désulfurée dont la composition est donnée dans le tableau 5.

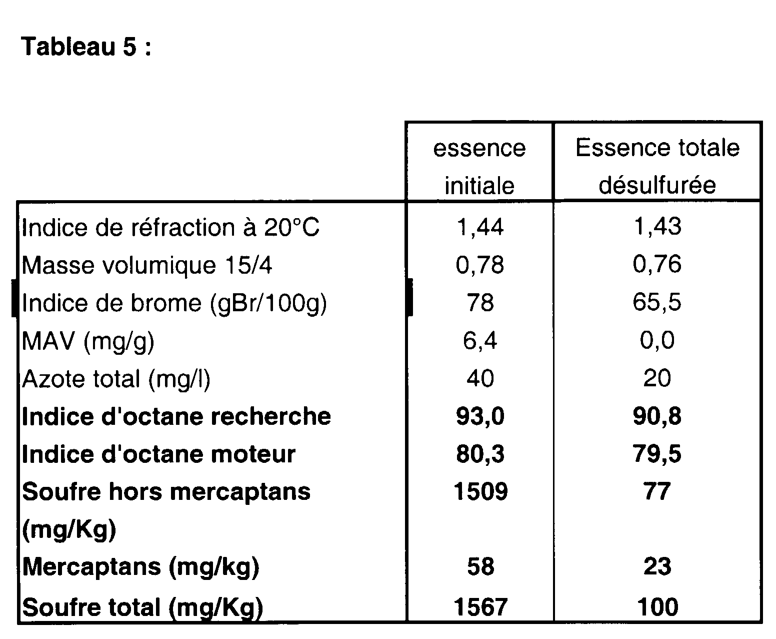

### Exemple 3.

L'essence lourde obtenue dans l'exemple 2 est soumise à une hydrodésulfuration sur l'enchaînement de catalyseurs A et B décrit dans l'exemple 2, en réacteur tubulaire isotherme.
25 ml du catalyseur A, et 50 ml du catalyseur B, sont placés dans le réacteur d'hydrodésulfuration. Les catalyseurs sont tout d'abord sulfurés par traitement pendant 4 heures sous une pression de 3,4 MPa à 350°C, au contact d'une charge constituée de 2% de soufre sous forme de diméthyldisulfure dans du n-heptane.

Les conditions opératoires de l'hydrodésulfuration sont les suivantes : VVH = 1.33 h⁻¹ par rapport à l'ensemble du lit catalytique H₂/HC = 400 I/I, P = 2,0 MPa. La température de la zone catalytique comprenant le catalyseur A est de 260°C, la température de la zone catalytique contenant le catalyseur B est de 290°C. Les caractéristiques des l'effluents ainsi obtenus sont présentées dans le tableau 6.

**Tableau 6**

| Caractéristiques de l'essence lourde après hydrodésulfuration | | | |
|---|---|---|---|
| | fraction lourde | Fraction lourde partielllement désulfurée (étape c) | fraction lourde totalement désulfurée (étape d) |
| S total (ppm) | 2078,0 | 252,0 | 150,0 |
| S RSH (ppm) | 7,0 | 151,0 | 55,0 |
| Indice de brome (gBr/100g) | 48,0 | 32,1 | 31,2 |
| RON | 92,0 | 87,3 | 87,1 |
| MON | 78,9 | 76,5 | 76,4 |
| H₂S (% Vol.) | | 0,17 | 0,18 |

L'essence lourde désulfurée et l'essence légère sont ensuite remélangées pour constituer une essence totale désulfurée dont la composition est donnée dans le tableau 7.

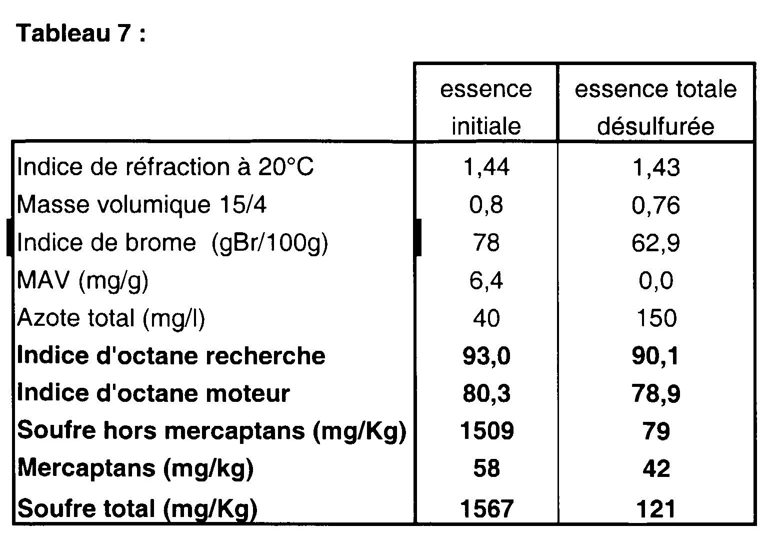

## Revendications

1. Procédé de production d'essence à faible teneur en soufre comprenant au moins les étapes suivantes :
a1) au moins une hydrogénation sélective des dioléfines présentes dans l'essence initiale,
b) au moins une séparation de l'essence obtenue à l'étape a1 en deux fractions, l'une pratiquement dépourvue de soufre et contenant les oléfines les plus légères de l'essence initiale (essence légère), l'autre dans laquelle la majeure partie des composés soufrés initialement présents dans l'essence initiale est concentrée (essence lourde),
c) au moins un traitement de l'essence lourde séparée à l'étape b sur un catalyseur permettant de décomposer ou d'hydrogéner au moins partiellement les composés soufrés insaturés dans des conditions où l'hydrogénation des oléfines sur ce catalyseur est limitée,
d) au moins un traitement de l'essence lourde obtenue à l'étape c, sans élimination de l'H2S formé au cours de cette étape, sur un catalyseur permettant de décomposer les composés soufrés insaturés non transformés en c et plus préférentiellement les composés soufrés saturés linéaires et/ou cycliques, avec une hydrogénation limitée des oléfines.

2. Procédé selon la revendication 1 comprenant en outre entre l'étape a1 et l'étape b au moins une étape a2 visant à augmenter le poids moléculaire des produits soufrés légers présents dans l'essence.

3. Procédé selon la revendication 2 dans lequel les étapes a1 et a2 sont réalisées simultanément dans le même réacteur et sur un même catalyseur.

4. Procédé selon l'une quelconque des revendications 1 à 3 dans lequel l'essence légère ne subit pas de post-traitement supplémentaire.

5. Procédé selon l'une quelconque des revendications 1 à 3 dans lequel l'essence légère subit un adoucissement extractif.

6. Procédé selon l'une quelconque des revendications 1 à 5 dans lequel l'essence lourde désulfurée aux étapes c et d est strippée au moyen d'un gaz inerte.

7. Procédé selon l'une quelconque des revendications 1 à 6 dans lequel les étapes c et d sont réalisées dans au moins deux réacteurs différents.

8. Procédé selon l'une quelconque des revendications 1 à 7 dans lequel l'essence légère et l'essence lourde sont mélangées après traitement.

9. Procédé selon l'une quelconque des revendications 2 à 8 dans lequel les catalyseurs des étapes a1, a2 et d comprennent au moins un métal du groupe VIII, et le catalyseur de l'étape c comprend au moins un élément choisi parmi les éléments des groupes VIII et Vlb.

10. Procédé selon la revendication 9 dans lequel un seul et même catalyseur est utilisé pour les étapes a1 et a2.

11. Procédé selon l'une des revendications 9 ou 10 dans lequel les catalyseurs utilisés aux étapes c et d sont sulfurés.

12. Procédé selon l'une quelconque des reevndications 1 à 11 dans lequel les étapes c et d sont réalisées dans deux réacteurs placés en série, le second réacteur traitant intégralement l'effluent du premier réacteur.
